(19)

Europäisches
Patentamt
European
Patent Office
Office européen
des brevets

(11) **EP 4 375 855 A1**

(12) **EUROPEAN PATENT APPLICATION**
published in accordance with Art. 153(4) EPC

(43) Date of publication:
**29.05.2024 Bulletin 2024/22**

(21) Application number: **22846116.6**

(22) Date of filing: **12.07.2022**

(51) International Patent Classification (IPC):
***G06F 17/17*** (2006.01)  ***G06F 5/01*** (2006.01)

(52) Cooperative Patent Classification (CPC):
**G06F 5/01; G06F 17/17**

(86) International application number:
**PCT/KR2022/010127**

(87) International publication number:
**WO 2023/003246 (26.01.2023 Gazette 2023/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.07.2021 KR 20210094365**

(71) Applicant: **SAPEON Korea Inc.
Seongnam-si, Gyeonggi-do 13595 (KR)**

(72) Inventor: **HAN, Jeong Ho
Seoul 04539 (KR)**

(74) Representative: **Berggren Oy
P.O. Box 16
Eteläinen Rautatiekatu 10A
00101 Helsinki (FI)**

(54) **FUNCTION APPROXIMATION DEVICE AND METHOD USING MULTI-LEVEL LOOK-UP TABLE**

(57)    A method and an apparatus are disclosed for a function approximation using a multi-level lookup table. The function approximation device and the method approximate function values for a function in multiple stages using a multi-level lookup table (LUT) in approximating nonlinear function values based on piecewise linear approximation or piecewise polynomial approximation. In the multi-level LUT, a segment length is set differently depending on the amount of change in the function in order to reduce approximation errors.

*136*

**FIG. 2**

EP 4 375 855 A1

**Description**

[Technical Field]

The present disclosure relates to a function approximation device and an method using a multi-level lookup table.

[Background]

The statements in this section merely provide background information related to the present disclosure and do not necessarily constitute prior art.

In neural networks, various nonlinear functions are used for arithmetic operations (e.g., exp, log, sqrt, tanh, sigmoid, mish, swish, and the like). For these nonlinear functions, in order to calculate correct function values, a lot of time may be required for calculation, or a large area may be required when the nonlinear functions are implemented as HW.

In general, when a nonlinear function is implemented as HW, it is possible to calculate an approximate value for the nonlinear function by dividing the nonlinear function into multiple segments and then applying piecewise linear approximation or piecewise polynomial approximation. When applying such piecewise approximation, a method of dividing a function into segments of different sizes can be used in order to reduce an approximation error of the function. However, if segments have different ranges, a process of comparing an input variable value with segments in all ranges needs to be performed in advance in order to determine a segment in which the input variable value is included. In other words, when there are L (where L is a natural number) segments of arbitrary sizes, a maximum of L+1 comparisons is required to compare the input variable value with the start value or end value of each segment. After completion of this comparison process, an approximation value for the function can be calculated by obtaining constants (hereinafter, an "approximation coefficients") for linear approximation or polynomial approximation for the corresponding segment. Therefore, for rapid calculation, L+1 comparators and a storage space for storing a boundary value of each segment may be required, and thus linear approximation or polynomial approximation based on an arbitrary segment is inefficient in terms of hardware (HW) implementation.

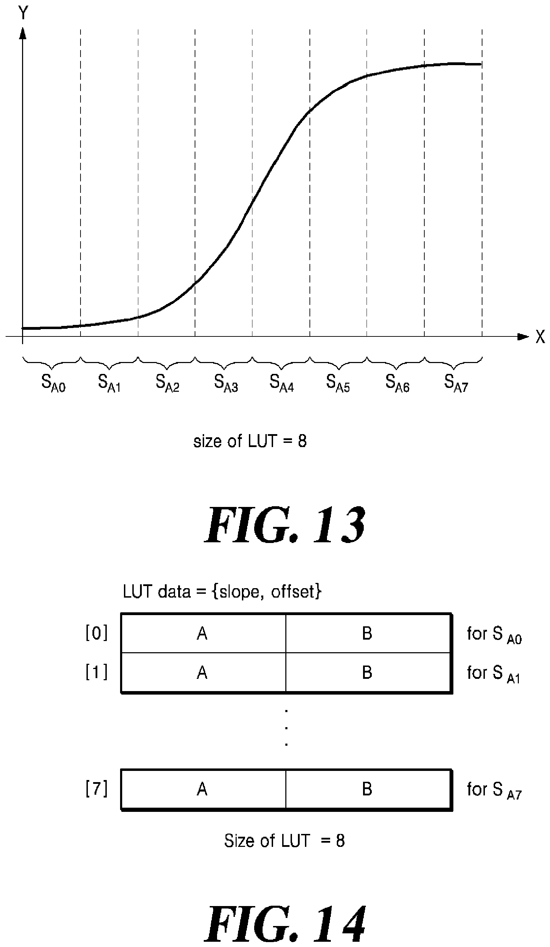

Therefore, when piecewise linear approximation or piecewise polynomial approximation is implemented as HW, as illustrated in FIG. 13, an approximation method based on equal segments in which the range of an input variable is divided into segments of equal size, and in particular, the number of total segments is set to $2^N$ (where N is a natural number) is used, in general. When $2^N$ equal segments are used, it is possible to easily determine a segment in which the input variable is included by using only upper N bits of the input variable without a complicated comparison process. Additionally, upper N bits may be used as an address to access a memory. Approximation based on equal segments has the advantage of being able to read approximation coefficients with respect to the corresponding segment from a lookup table (LUT) as illustrated in FIG. 14 using the upper N bits. Here, the approximation coefficients include a slope and an offset in the case of linear approximation.

Meanwhile, as illustrated in FIG. 13, when the entire section is divided into 8 segments, the amount of change in the given function is small in the segments $S_{A0}$, $S_{A3}$, $S_{A4}$, and $S_{A7}$, thus making linear approximation becomes easier. However, since the shape of the function is a curve in the segments $S_{A1}$ and $S_{A6}$, an error occurs during linear approximation, and in particular, the curvature increases in the segments $S_{A2}$ and $S_{A5}$, and thus a larger error may occur during linear approximation compared to other segments. Approximation based on equal segments can reduce an approximation error for a given function as the number of segments increases, however the size of the LUT for storing approximation coefficients increases in proportion to the number of segments, and thus there is a problem that the maximum number of segments may be limited.

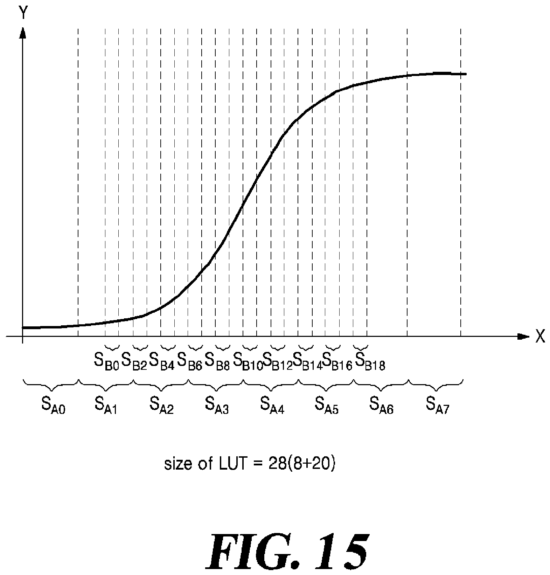

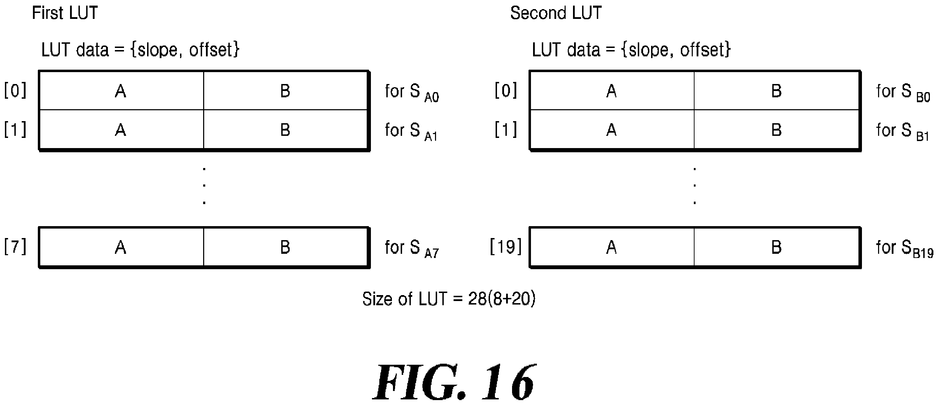

As another prior art, NVDLA, an open source artificial intelligence processor released by NVIDIA, uses linear approximation based on two LUTs, as illustrated in FIGS. 15 and 16, to reduce approximation errors (refer to "http://nvdla.org/hw/v1/ias/lut-programming.html"). In this method, a given function is linearly approximated by dividing the entire input section of the function into L equal segments through the first LUT, and the given function is linearly approximated by dividing an input segment to be calculated more precisely into J equal segments through the second LUT.

For example, as illustrated in FIG. 15, a function is linearly approximated by dividing the entire input section into 8 equal segments $S_{A0}$ to $S_{A7}$ using the first LUT, and a portion of the input range is divided into 20 equal sub-segments $S_{B0}$ to $S_{B19}$ using the second LUT to linearly approximate the function. As a result, the amount of change in the function within one sub-segment, illustrated in FIG. 15, is smaller than the amount of change in the function within one segment, illustrated in FIG. 13, thus making linear approximation based on two LUTs becomes easier.

The total size of the two LUTs as illustrated in FIG. 15 (which is proportional to the number of segments supported by the LUTs) can allow for the storage of approximation coefficients for a total of 28 (8+20) segments, as illustrated in FIG. 16.

NVDLA first calculates two values simultaneously for a given input variable value using two LUTs. Next, if the input variable value is within a range that can be approximated through the second LUT, a value calculated based on the second LUT is selected as an output, and if the input variable value is not within the range, a value calculated based on the first LUT is selected as an output.

Although such piecewise linear approximation based on two LUTs is effective in reducing approximation errors when there is a significant change in only a portion of the entire input section of a given function, this method has a problem that approximation errors cannot be effectively reduced when several portions have significant changes, or even if there is a change in a portion and the change is severely significant.

Therefore, in performing piecewise approximation on nonlinear functions with various characteristics, an LUT structure and an operating method capable of effectively reducing approximation errors are required.

[Disclosure]

[Technical Problem]

The present disclosure seeks to provide a function approximation device and an method for approximating function values for a function in multiple stages using a multi-level lookup table (LUT) in approximating nonlinear function values based on piecewise linear approximation or piecewise polynomial approximation. In the multi-level LUT, a segment length is set differently depending on the amount of change in the function in order to reduce approximation errors.

[Technical Solution]

At least one aspect of the present disclosure provides a piecewise function approximation method performed by a computing device. The piecewise function approximation method includes obtaining an input variable value for a function. The piecewise function approximation method also includes extracting approximation coefficients for the function using a multi-level lookup table (LUT) based on the input variable value. The multi-level LUT including K (K being a natural number of 2 or more) LUTs. The piecewise function approximation method also includes calculating a function value for the input variable value using the approximation coefficients. The K LUTs support different segment sizes, a segment size supported by a k-th (k being a natural number from 1 to K-1) LUT is greater than a segment side supported by a (k+1)-th LUT, and the (k+1)-th LUT is accessed based on mapping information provided by the k-th LUT.

Another aspect of the present disclosure provides a piecewise function approximation device. The piecewise function approximation device includes an input unit configured to obtain an input variable value for a function. The piecewise function approximation device also includes a memory containing a multi-level lookup table (LUT). The multi-level LUT includes K (K being a natural number of 2 or more) LUTs. The piecewise function approximation device also includes a coefficient extractor configured to extract approximation coefficients for the function using the multi-level lookup table (LUT) based on the input variable value. The piecewise function approximation device also includes a function value generator configured to calculate a function value for the input variable value using the approximation coefficients. The K LUTs support different segment sizes, a segment size supported by a k-th (k being a natural number from 1 to K-1) LUT is greater than a segment side supported by a (k+1)-th LUT, and the (k+1)-th LUT is accessed based on mapping information provided by the k-th LUT.

Yet another aspect of the present disclosure provides a computer-readable recording medium in which instructions are stored, the instructions causing a computer, when executed by the computer, to execute obtaining an input variable value for a function. The instructions also cause a computer to execute extracting approximation coefficients for the function using a multi-level lookup table (LUT) based on the input variable value. The multi-level LUT including K (K being a natural number of 2 or more) LUTs. The instructions also cause a computer to execute calculating a function value for the input variable value using the approximation coefficients. The K LUTs support different segment sizes, a segment size supported by a k-th (k being a natural number from 1 to K-1) LUT is greater than a segment side supported by a (k+1)-th LUT, and the (k+1)-th LUT is accessed based on mapping information provided by the k-th LUT.

[Advantageous Effects]

As described above, the present disclosure provides a function approximation device and an method for approximating function values for a nonlinear function in multiple stages using a multi-level LUT in which a segment length is set differently depending on the amount of change in the nonlinear function. Thus, the function approximation device and the method reduce approximation errors using a small-sized LUT.

[Brief Description of the Drawings]

FIG. 1 is a schematic block diagram of a system equipped with a function approximation device according to an embodiment of the present disclosure.

FIG. 2 is a schematic block diagram of the function approximation device according to an embodiment of the present disclosure.

FIG. 3 is an exemplary diagram illustrating linear function approximation using a two-stage lookup table (LUT) according to an embodiment of the present disclosure.

FIG. 4 is an exemplary diagram of the structure of a two-stage LUT according to an embodiment of the present disclosure.

FIG. 5 is an exemplary diagram illustrating the configuration of a half-precision floating point (FP) number according to an embodiment of the present disclosure.

FIG. 6 is an exemplary diagram illustrating notation of mapping information of a second-stage LUT according to an embodiment of the present disclosure.

FIG. 7 is an exemplary diagram illustrating notation of mapping information of a second-stage LUT according to another embodiment of the present disclosure.

FIG. 8 is an exemplary diagram illustrating notation of mapping information of a second-stage LUT according to another embodiment of the present disclosure.

FIG. 9 is a flowchart of a function approximation method based on a two-stage LUT according to an embodiment of the present disclosure.

FIG. 10 is a schematic block diagram of a function approximation device based on a multi-level LUT according to an embodiment of the present disclosure.

FIG. 11 is a flowchart of a function approximation method based on a multi-level LUT according to an embodiment of the present disclosure.

FIG. 12 is a flowchart of a method of generating a two-stage LUT based on linear approximation according to an embodiment of the present disclosure.

FIG. 13 is an exemplary diagram illustrating linear function approximation using one LUT.

FIG. 14 is an exemplary diagram of the structure of one LUT.

FIG. 15 is an exemplary diagram illustrating linear function approximation using two LUTs.

FIG. 16 is an exemplary diagram of the structure of two LUTs.

[Detailed Description]

Hereinafter, some embodiments of the present disclosure will be described in detail with reference to the accompanying illustrative drawings. In the following description, like reference numerals preferably designate like elements, although the elements are shown in different drawings. Further, in the following description of some embodiments, a detailed description of related known components and functions when considered to obscure the subject of the present disclosure will be omitted for the purpose of clarity and for brevity.

Additionally, various terms such as first, second, A, B, (a), (b), etc., are used solely to differentiate one component from the other but not to imply or suggest the substances, order, or sequence of the components. Throughout this specification, when a part "includes" or "comprises" a component, the part is meant to further include other components, not to exclude thereof unless specifically stated to the contrary. The terms such as "unit," "module," and the like refer to one or more units for processing at least one function or operation, which may be implemented by hardware, software, or a combination thereof.

The description of the present disclosure to be presented below in conjunction with the accompanying drawings is intended to describe exemplary embodiments of the present disclosure and is not intended to represent the only embodiments in which the technical idea of the present disclosure may be practiced.

The present embodiment discloses a function approximation device and an method using a multi-level lookup table. More specifically, the present embodiment provides a function approximation device and an method for approximating function values for a function in multiple stages using a multi-level lookup table (LUT) in approximating nonlinear function values based on piecewise linear approximation or piecewise polynomial approximation. In the multi-level LUT, a segment length is set differently depending on the amount of change in the function in order to reduce approximation errors.

An HW accelerator for neural networks generally includes an engine that exclusively performs matrix operations such as a convolution operation, a processor that performs a nonlinear function such as an activation function, or a pooling function, an on-chip memory, and a direct memory access (DMA) for external memory access. The function approximation device according to the present embodiment can be mounted and operated on the processor among these components.

In the following description, a multi-level (hereinafter, used interchangeably with "multi-stages") LUT refers to all LUTs included in the multi-level LUT. For example, a 2-level LUT collectively refers to two included LUTs. Additionally, in a multi-stage LUT, the output of the subsequent LUT is generated using the output of the previous LUT.

Each LUT included in a multi-level LUT is called a first LUT, a second LUT, and the like.

Although NVDLA as described above includes two LUTs, the LUTs included in NVDLA do not correspond to a multi-level LUT because the output of the first LUT and the second LUT are generated simultaneously.

Hereinafter, the original nonlinear function that is a subject of piecewise approximation is referred to as a "target function" or a "function".

In addition, a section and a segment have the same meaning and thus are used interchangeably, and therefore, a sub-section and a sub-segment have the same meaning and thus are also used interchangeably.

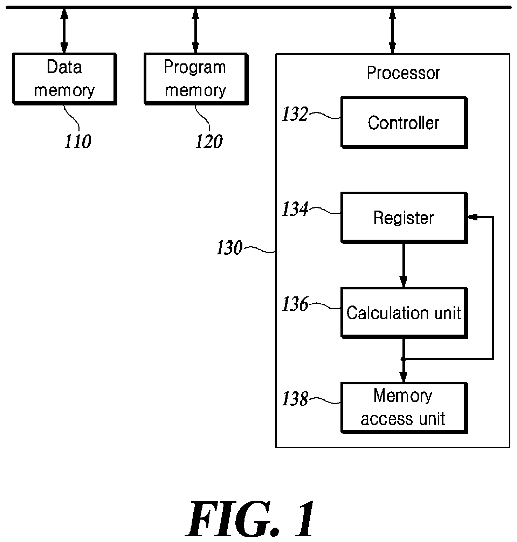

FIG. 1 is a schematic block diagram of a system equipped with a function approximation device according to an embodiment of the present disclosure.

The system equipped with the function approximation device includes a data memory 110, a program memory 120, and a processor 130. The processor 130 can perform function approximation on a target function using the data memory 110 and the program memory 120.

The processor 130 includes a controller 132, a register 134, a calculation unit 136, and a memory access unit 138. The register 134 is a place where calculation input and output of the calculation unit 136 are stored, the memory access unit 138 performs access to the data memory 110 and program memory 120, and the controller 132 controls operations (e.g., power management, interrupt processing, and the like) of the processor 130. The calculation unit 136 is equipped with the function approximation device according to the present embodiment and approximates function values for the target function in multiple stages.

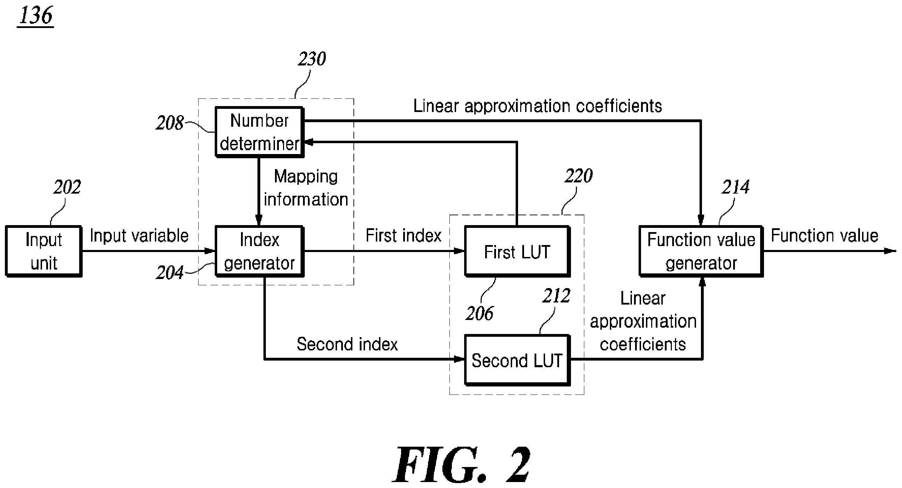

FIG. 2 is a schematic block diagram of a function approximation device according to an embodiment of the present disclosure.

The function approximation device is mounted on the calculation unit 136 and approximates function values for a function in multiple stages using a multi-level LUT in order to perform piecewise linear approximation or piecewise polynomial approximation. FIG. 2 shows a function approximation device using a two-level LUT. The function approximation device includes all or some of an input unit 202, an index generator 204, a first LUT 206, a number determiner 208, a second LUT 212, and a function value generator 214. The first LUT 206 and the second LUT 212 may be included in a memory 220 in the function approximation device, and the index generator 204 and the number determiner 208 may be included in a coefficient extractor 230 in the function approximation device.

FIG. 2 illustrates an exemplary configuration according to the present embodiment, various implementations including other components or different connections between components may be achieved depending on the operation of the index generator, the structure of the multi-level LUT, the operation of the function value generator, and the configuration of the memory.

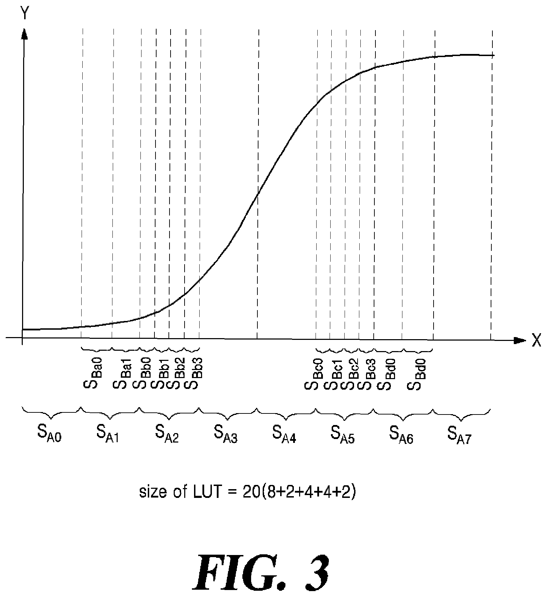

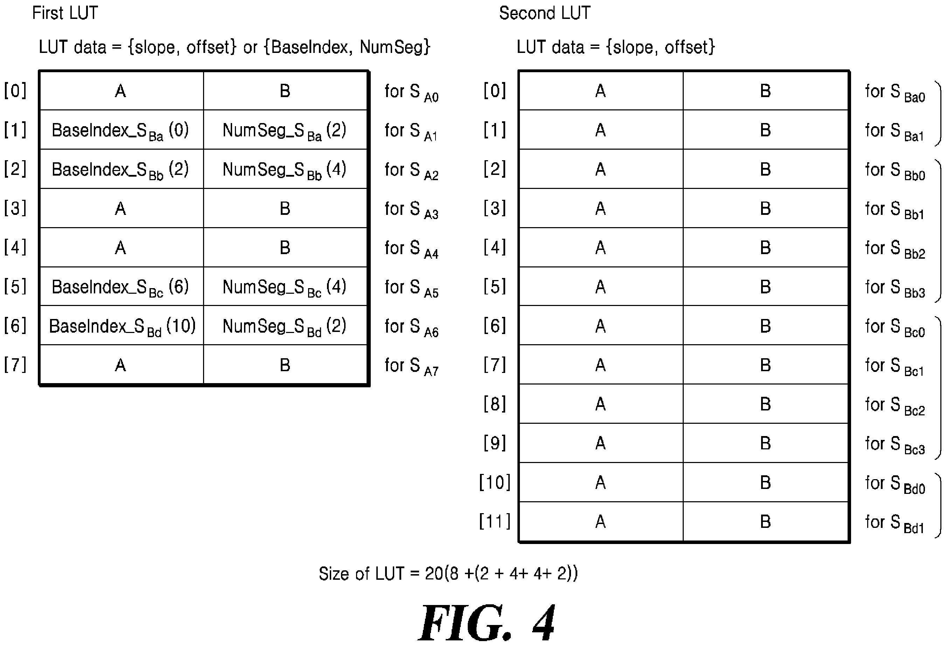

First, the structures of the first LUT 206 of the first stage and the second LUT 212 of the second stage, and the relationship between themare described using the examples of FIGS. 3 and 4.

As described above, when $2^N$ equal segments are used, the LUTs can be accessed using only upper N bits of an input variable. In the example of FIGS. 3 and 4, N is 3 for the first LUT 206, and m (where m is a natural number) bits from the (N+1)-th bit are used for the second LUT 212 and m is 1 or 2. The examples in FIGS. 3 and 4 show linear function approximation.

FIG. 3 is an exemplary diagram illustrating linear function approximation using a two-stage LUT according to an embodiment of the present disclosure.

A brief process in which a computing device generates the second LUT 212 in advance is as follows. The computing device divides the entire input section into 8 segments $S_{A0}$ to $S_{A7}$ using the first LUT 206, generates approximation coefficients with respect to a target function for each segment, and calculates approximation errors. To further reduce the approximation errors, the computing device divides segments with large approximation errors into sub-segments $S_{Ba}, S_{Bb}, S_{Bc}, S_{Bd}$ and generates approximation coefficients for each sub-segment. Here, linear approximation coefficients for a sub-segment are stored in the second LUT 212. The detailed process in which the computing device generates a multi-level LUT is described later.

In the example of FIG. 3, segments $S_{A1}$ and $S_{A6}$ in which the amount of change in the target function is relatively small are each subdivided into two sub-segments $SB_{a0}, SB_{a1}, SB_{d0}$ and $SB_{d1}$, and segments $S_{A2}$ and $S_{A5}$ in which the amount of change in the target function is large are each subdivided into four sub-segments $S_{Bb0}$ to $S_{Bb3}$ and $S_{BC0}$ to $S_{BC3}$. Here, the first LUT 206 stores information on how many sub-segments a corresponding section is subdivided into and information on a position in the second LUT 212 where linear approximation coefficients are stored as data regarding the subdivided sub-segments $S_{A1}, S_{A2}, S_{A5},$ and $S_{A6}$ instead of approximation coefficients.

When an input variable value x is given, the function approximation device reads the value of the first LUT 206 using the input variable value and determines whether the read value is linear approximation coefficients or mapping information for the LUT of the second stage (hereinafter, "mapping information"). If the read value is mapping information, the function approximation device reads linear approximation coefficients corresponding to the input variable value at the corresponding position in the second LUT 212 and then calculates an approximation value. As illustrated in FIG. 3, the total size of the two LUTs is 20 (8+(2+4+4+2)). Therefore, the function approximation device according to the present embodiment can approximate a function using a LUT of a smaller size than that illustrated in FIG. 16.

FIG. 4 is an exemplary diagram of the structure of a two-stage LUT according to an embodiment of the present disclosure.

FIG. 4 shows values stored in each LUT when a multi-level LUT is applied as in the example in FIG. 3. As described above, when the entire input section is divided into eight segments, the first LUT 206 i) stores linear approximation coefficients for individual segments, or ii) stores mapping information for the LUT of the second stage. The second LUT 212 stores corresponding approximation coefficients when linear approximation is performed by dividing an individual segment mapped to the second-stage LUT into sub-segments of a required size.

Since positions [0], [3], [4], and [7] in the first LUT 206 correspond to segments that are not mapped to the second-stage LUT, coefficients (A and B in the example of FIG. 4) for the slope of a straight line and an offset for linear approximation for the sections are stored.

Positions [1] and [6] in the first LUT 206 subdivide the section two sub-segments respectively and store mapping information BaseIndex and NumSeg for the second-stage LUT. Here, the base index BaseIndex indicates the starting position in the second LUT 212, and the number of sub-segments NumSeg indicates the number of sub-segments from the starting position. For example, in the example of FIG. 4, [1] of the first LUT 206 stores (BaseIndex, NumSeg) = (0, 2). According to these values, it can be ascertained that the corresponding segment [1] is divided into two sub-segments and linear approximation coefficients are stored at positions [0] to [1] in the second LUT 212.

Positions [2] and [5] in the first LUT 206 subdivide into four sub-segments, and store mapping information. For example, in the example of FIG. 4, [2] of the first LUT 206 stores (BaseIndex, NumSeg) = (2, 4). Accordingly, it can be ascertained that the segment corresponding to [2] is subdivided into four sub-segments, and linear approximation coefficients are stored at positions [2] to [5] in the second LUT 212.

As described above, the first LUT 206 and the second LUT 212 support different segment sizes, and the segment size supported by the first LUT 206 is greater than the segment size supported by the second LUT 212. In addition, the function approximation device can access the second LUT 212 based on mapping information provided by the first LUT 206.

Hereinafter, the remaining components of the function approximation device are described.

The input unit 202 obtains an input variable (value) x for the target function. Here, the input variable may be represented as a floating point number (hereinafter referred to as "FP number") commonly used in computing systems. The FP number system is capable of representing a very wide range of a size.

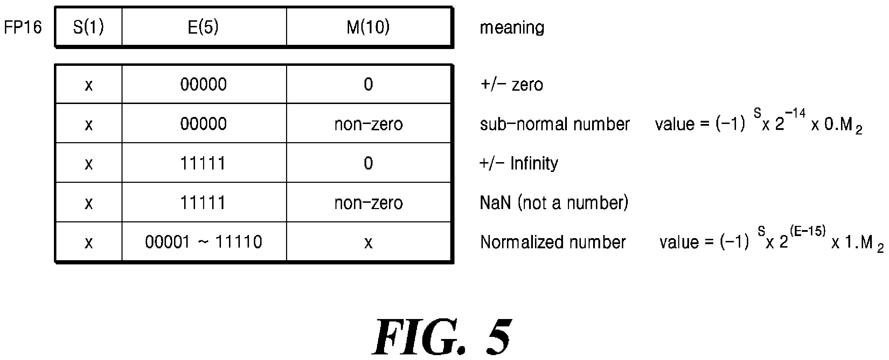

A half-precision FP number (hereinafter "FP16", i.e., a 16-bit floating point number) is composed of a 1-bit sign S, a 5-bit exponent E, and 10-bit mantissa M, as illustrated in FIG. 5. Here, the half-precision FP number can represent a normalized number including +/-0, or a special value NaN (Not a Number), +/-Inf (infinity), or a sub-normal number depending on the values of the E field and M field. In the example of FIG. 5, $M_2 = 1011_2$ represents "$1.M_2 = 1 + 1 \times (2^{-1}) + 1 \times (2^{-3}) + 1 \times (2^{-4})$" for a number and represents "$0.M_2 = 0 + 1 \times (2^{-1}) + 1(2^{-3}) + 1 \times (2^{-4})$" for a sub-normal number.

At the time of storing coefficients corresponding to a slope and an offset for linear approximation in an LUT, a normalized number and +/-0, or +/-Inf are used as numbers, but a code such as NaN is not used. Therefore, when two types of information (linear approximation coefficients or mapping information for the second-stage LUT) are stored in the first LUT 206, mapping information can be stored without additional overhead using a code such as NaN, which is not used as a number in the FP number system. Accordingly, it is possible to distinguish whether the value read from the first LUT 206 is linear approximation coefficients or mapping information. The method of mapping the mapping information for the second-stage LUT to the NaN code is explained later.

The index generator 204 generates a first index for accessing the first LUT 206 from an input variable. The first index can indicate a position in the first LUT 206 where information on a segment including the input variable value is stored.

When the input variable is an FP number, an N-bit first index may be generated by converting the FP number into an integer and extracting upper N bits. When the input variable is in the form of an integer, as described above, the first index can be generated by extracting the upper N bits of the input variable.

The function approximation device extracts the output of the first LUT 206 based on the first index. As described above, the output may be linear approximation coefficients for a segment supported by the first LUT 206 or mapping information for the second LUT 212.

The number determiner 208 determines whether the output of the first LUT 206 is a number in the floating point number system.

If the output of the first LUT 206 is a number, it represents linear approximation coefficients for the segment, i.e., a slope and an offset.

On the other hand, if the output of the first LUT 206 is not a number (e.g., NaN code), the output of the first LUT 206 represents mapping information for the second LUT 212 and includes a base index and the number of sub-segments.

The index generator 204 generates a second index for accessing the second LUT 212 from the input variable and mapping information. When the number of sub-segments is $2^m$, the index generator 204 may calculate the position of a corresponding sub-segment using m bits after the N bits used for the first index, and then add the base index to the position of the sub-segment to generate a second index.

The function approximation device extracts the output of the second LUT 212 based on the second index. The output of the second LUT 212 represents linear approximation coefficients for sub-segments.

The function value generator 214 generates an approximate value for the target function using linear approximation coefficients. Here, the linear approximation coefficients, i.e., slopes A and offsets B, may be the output of the first LUT 206 or the second LUT 212. The approximation value for the function can be calculated as y=Ax+B for the input variable x.

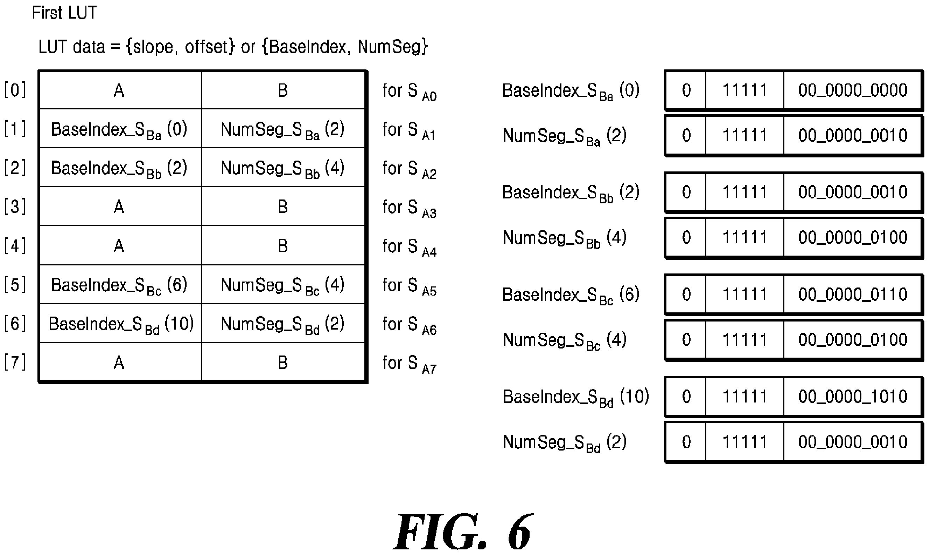

Hereinafter, the method of assigning mapping information for the second-stage LUT to a NaN code in the FP number system is described using FIGS. 6 to 8.

In the FP number system, NaN indicates a case in which all bits of the E field are 1 and the M field is not 0, as illustrated in FIG. 5. Accordingly, by storing a non-zero value in the M field of the NaN code as mapping information for the second-stage LUT, it is possible to distinguish whether the value stored in the second LUT 212 is mapping information.

Based on the fact that the number of segments in mapping information is always greater than 0, the NaN code can be used as mapping information. In the example of FIG. 6, if all bit values of the E field are 1 and the value in the M field is non-zero for values stored in position B among values read from the first LUT 206, the function approximation device considers the values stored at position B as mapping information for the second-stage LUT. Further, the function approximation device checks mapping information, BaseIndex and NumSeg using the values stored in the M field at the FP numbers at positions A and B.

Meanwhile, in the case of the method illustrated in FIG. 6, in order to determine whether the value of the M field is 0, HW logic needs to be used, as described above. However, as the number of bits allocated to the M field increases, delay according to the logic may increase.

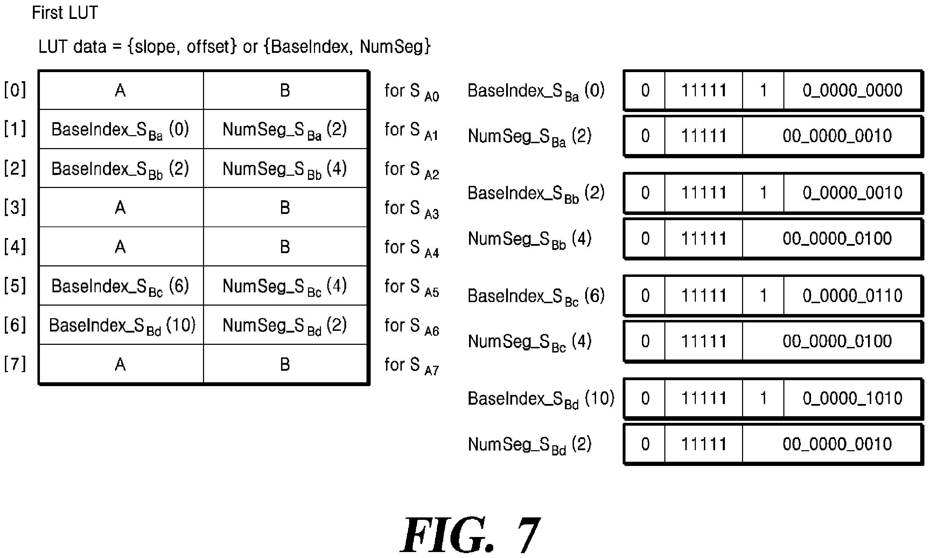

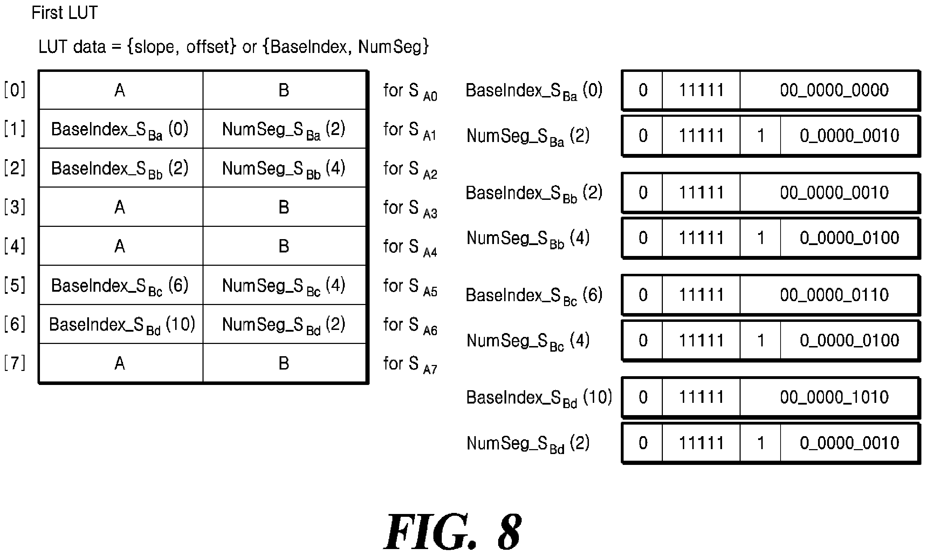

To reduce such delay and enable faster operation, the bit value of a preset position in the M field may be fixed to 1 at the time of storing mapping information in NaN code. The examples of FIGS. 7 and 8 show a method of fixing the most significant bit value of the M field among the values stored in the first LUT 206 to 1 and then storing mapping information for the second-stage LUT. In the example of FIG. 7, whether or not mapping information is included can be checked using a value stored at position A, and in the example of FIG. 8, whether or not mapping information can be checked using a value stored at position B.

In another embodiment according to the present disclosure, when a sub-normal number in the FP number system is not used to represent approximation coefficients, the mapping information for the second-stage LUT may be mapped to a sub-normal number code.

In the FP number system, a sub-normal number indicates a case in which all bits of the E field are 0 and the M field is not 0, as illustrated in FIG. 5. Therefore, by storing a non-zero value in the M field of the sub-normal number code as mapping information for the second-stage LUT, it is possible to distinguish whether a value stored in the second LUT 212 is mapping information.

Based on the fact that the number of segments in mapping information is always greater than 0, a sub-normal number code can be used as mapping information. In other words, if all bit values of the E field are 0 and the value of the M field is non-zero for values stored at position B among values read from the first LUT 206, the function approximation device considers a value stored at position of B as mapping information for the second-stage LUT.

Additionally, for rapid operation, the bit value of a preset position in the M fields may be fixed to 1 at the time of storing mapping information in a sub-normal number code.

Meanwhile, in the FP number system, the S field of the NaN code or sub-normal number code has a "don't care" condition.

In another embodiment according to the present disclosure, when mapping information for the second-stage LUT is stored in a NaN code or a sub-normal number code, the S field of the corresponding code may be set to a preset value in order to indicate that it is mapping information. For example, according to a preset rule, the M field can indicate mapping information if the S field is 1.

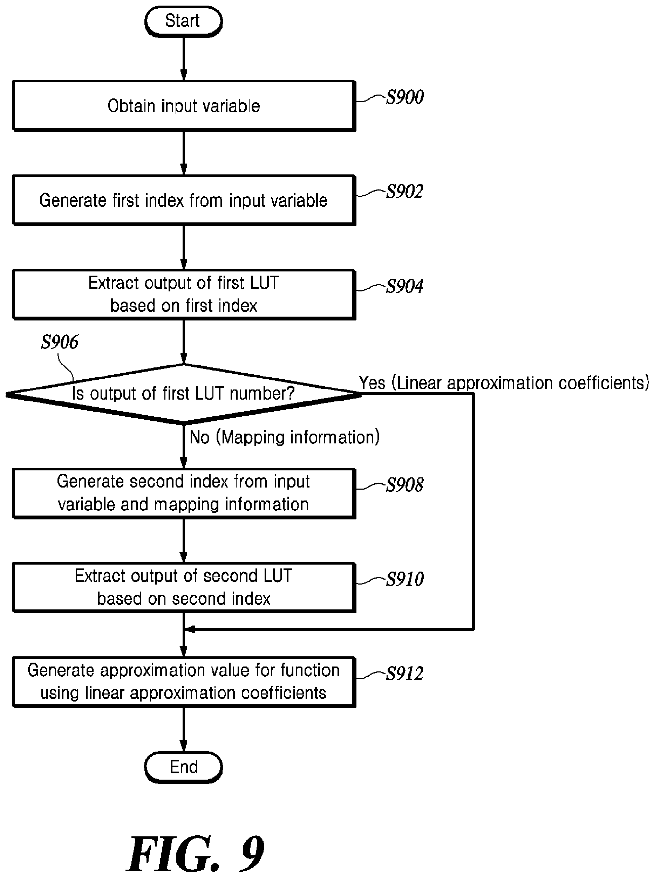

FIG. 9 is a flowchart of a function approximation method based on a two-stage LUT according to an embodiment of the present disclosure.

The function approximation device obtains an input variable (value) for a target function (S900).

The function approximation device generates a first index from the input variable in order to access the first LUT 206 (S902). The first index may indicate a position in the first LUT 206 where information on a segment including the input variable value is stored.

The function approximation device extracts the output of the first LUT 206 based on the first index (S904). As described above, the output may be linear approximation coefficients for a segment supported by the first LUT 206, or mapping information for the second LUT 212.

The function approximation device determines whether the output of the first LUT 206 is a number in the floating point number system (S906).

If the output of the first LUT 206 is a number (Yes in S906), the output of the first LUT 206 represents linear approximation coefficients, i.e., a slope and an offset, for the segment.

On the other hand, if the output of the first LUT 206 is not a number (e.g., NaN code) (No in S906), the output of the first LUT 206 represents mapping information for the second LUT 212 and includes a base index and the number of sub-segments.

The function approximation device generates a second index from the input variable and the mapping information in order to access the second LUT 212 (S908).

The function approximation device extracts the output of the second LUT 212 based on the second index (S910). The output of the second LUT 212 represents linear approximation coefficients for a sub-segment.

The function approximation device generates an approximation value for the function using linear approximation coefficients (S912). Here, the linear approximation coefficients, i.e., slope A and offset B, may be the output of the first LUT 206 or the second LUT 212. An approximation value for the function can be calculated as $y=Ax+B$ for the input variable x.

Although the present embodiment has been described with respect to linear approximation based on a two-stage LUT, the scope of application of the present embodiment is not necessarily limited thereto. In another embodiment according to the present disclosure, when the function approximation device includes a multi-level LUT composed of K (K being a natural number) LUTs, linear approximation based on a multi-stage LUT can be implemented by equally applying the process of generating mapping information for the second LUT 212 based on the first LUT 206, as illustrated in FIGS. 2 and 9, to all subsequent LUTs including the third LUT.

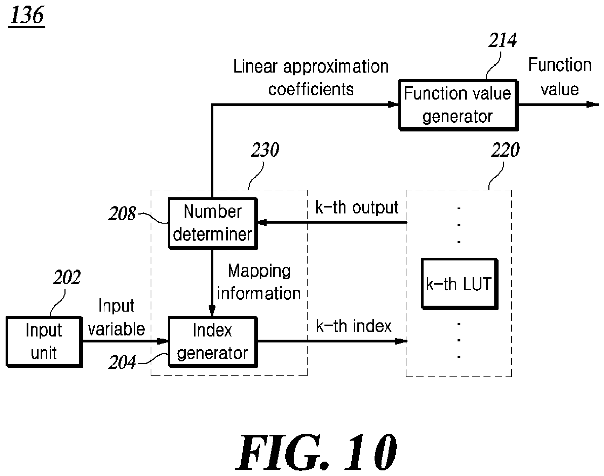

FIG. 10 is a schematic block diagram of a function approximation device based on a multi-level LUT according to an embodiment of the present disclosure.

The function approximation device based on a multi-level LUT is mounted on the calculation unit 136 and implemented in the same manner as illustrated in FIG. 2, but the memory 220 includes a multi-level LUT.

Here, the multi-level LUT includes K (K being a natural number of 2 or more) LUTs. The K LUTs support different segment sizes, and the segment size supported by a k-th (where k is a natural number from 1 to K-1) LUT is greater than the segment size supported by a (k+1)-th LUT. Each of the K LUTs can be expressed in the floating point number system, as described above.

The function approximation device can access the (k+1)-th LUT based on mapping information provided by the k-th LUT. Therefore, the k-th LUT includes linear approximation coefficients or mapping information as information on a segment, and the K-th LUT that is the last stage includes linear approximation coefficients as information on a segment.

The mapping information is information for dividing each of t segments (where t is a natural number) among all segments supported by the (k+1)-th LUT into sub-segments. Here, each of the t segments is a segment in which an approximation error for the function is greater than a preset threshold value. The number of sub-segments may be determined depending on the size of an approximation error of each of the t segments for the function. The mapping information may include, for each of the t segments, a base index that is the starting position in the (k+1)-th LUT, and the number of sub-segments.

Meanwhile, since the method of defining mapping information in the floating point number system has already been described based on FIGS. 5 to 8, further detailed description is omitted.

In the example of FIG. 10, the input unit 202 obtains an input variable (value) for the target function.

The coefficient extractor 230 extracts linear approximation coefficients for the function using a multi-level LUT based on the input variable.

First, the index generator 204 generates a j-th index (where j is a natural number from 1 to K) based on the input variables and mapping information. Here, the first index is generated based on only the input variable.

Next, the number determiner 208 determines whether the j-th output extracted from the j-th LUT is a number based on the j-th index.

The coefficient extractor 230 extracts the j-th output as linear approximation coefficients if the j-th output is a number in the floating point number system, and if the j-th output is mapping information, re-extracts linear approximation coefficients using the mapping information based on the LUT of the next stage.

The function value generator 214 generates a function value for the input variable using the linear approximation coefficients.

Meanwhile, the memory 220 including the multi-level LUT, illustrated in FIG. 2 or FIG. 10, may be implemented as follows.

In one embodiment of the present disclosure, each LUT included in the multi-level LUT may be implemented as a physically separate memory. When accessing each LUT, the function approximation device can access each LUT included in a separate memory based on a pipelined manner. Here, throughput for function approximation can be increased by arranging the number determiner 208 and the coefficient extractor 230 at each pipeline stage to generate an index for accessing each LUT.

In another embodiment according to the present disclosure, in order to reduce the area of HW for function approximation, the multi-level LUT may be stored in physically the same memory with each LUT included in the multi-level LUT logically separated. The function approximation device can generate an index to access each LUT based on the prestored starting position in the memory for each LUT.

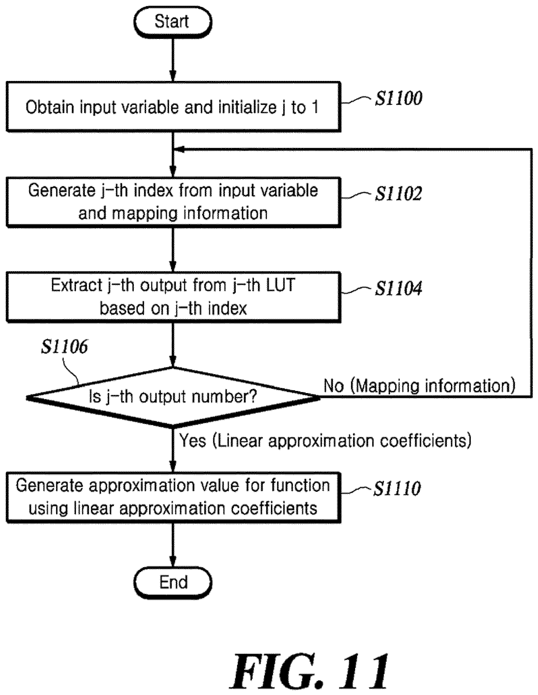

FIG. 11 is a flowchart of a function approximation method based on a multi-level LUT according to an embodiment of the present disclosure.

The function approximation device obtains an input variable (value) and initializes j (where j is a natural number from 1 to K) to 1 (S1100).

The function approximation device generates the j-th index based on the input variable and mapping information (S1102). Here, the first index is generated based on only the input variable.

The function approximation device generates the j-th output from the j-th LUT based on the j-th index (S1104). The j-th output may be linear approximation coefficients for a segment supported by the j-th LUT, or mapping information for the LUT of the next stage.

The function approximation device determines whether the j-th output is a number in the floating point number system (1106).

If the j-th output is mapping information (No in S1106), the function approximation device increases j by 1 (S1108) and then repeats the process of extracting linear approximation coefficients using the mapping information (S1102 to S1106). If the j-th output is a number (Yes in S1106), the function approximation device extracts the j-th output as linear approximation coefficients.

The function approximation device generates an approximation value for the function using the linear approximation coefficients (S1110).

Hereinafter, a method in which a computing device generates a two-stage LUT in linear approximation in which a two-stage LUT among multi-level LUTs is used and the number of segments in each stage is set to $2^N$ is described.

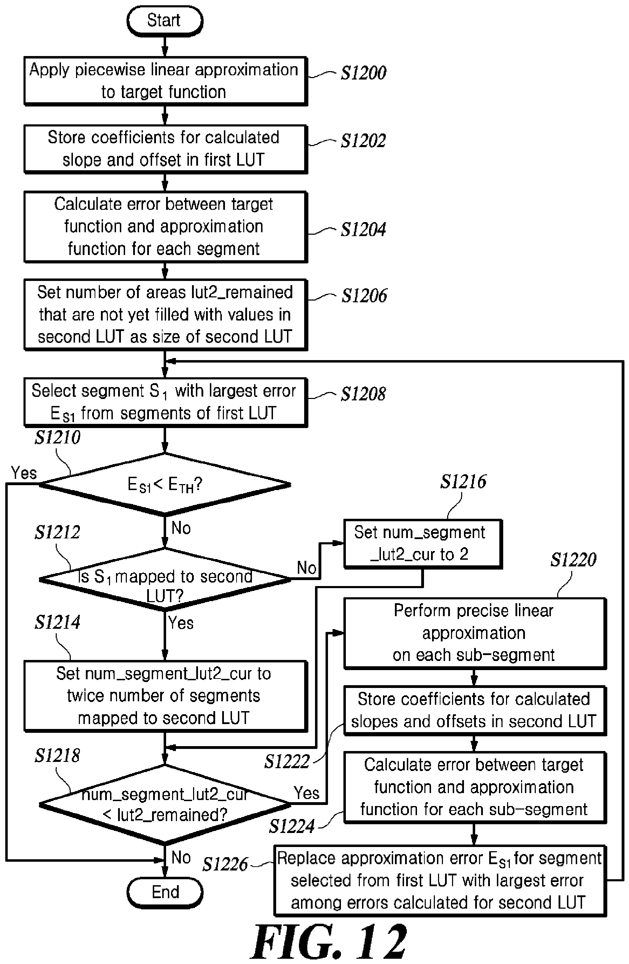

FIG. 12 is a flowchart of a method of generating a two-stage LUT based on linear approximation according to an embodiment of the present disclosure.

The computing device assumes that an LUT size (the number of segments supported by the first LUT or the second LUT) available in HW is given.

The computing device applies piecewise linear approximation to a target function by dividing the entire input range of the target function into the size num_lut1 of the first LUT such that an error between the target function and an approximation function is reduced (S1200).

The computing device stores coefficients for a calculated slope and offset in the first LUT (S1202). Here, it is indicated that each segment is not mapped to the second LUT (link_info[]. mapped = false).

The computing device calculates an error between the target function and the approximate function for each segment (S1204).

The number of areas lut2_remained that are not yet filled with values in the second LUT is set as the size of the second LUT (S1206).

The computing device selects a segment $S_1$ with the largest error $E_{S1}$ among the segments of the first LUT (S1208). Here, a large error indicates that the amount of change in the target function in the corresponding segment is large and thus the difference in value between the target function and the approximate function is large.

The computing device checks whether the largest error $E_{S1}$ is less than a preset target error threshold value $E_{TH}$ (S1210). If $E_{S1}$ is greater than the target error threshold value (No in S1210), the computing device performs a process of dividing the corresponding segment into sub-segments (S1212 to S1226). If $E_{S1}$ is less than the target error threshold value (Yes in S1206), the computing device ends the process of dividing the segment into sub-segments.

The computing device checks whether the currently selected segment is mapped to the second LUT (S1212). If the currently selected segment is mapped to the second LUT (Yes in S1212), the computing device sets num_segment_lut2_cur to twice the number of segments mapped to the second LUT (S1214). If the currently selected segment is not mapped to the second LUT (No in S1212), the computing device sets num_segment_lut2_cur to 2 (S1216).

Next, the computing device checks whether num_segment_lut2_cur is less than the number of vacant spaces of currently available lut2, lut2_remained (S1218). If not (No in S1218), the computing device ends the process of dividing into sub-segments.

If num_segment_lut2_cur is less than the number of vacant spaces of currently available lut2 (Yes in S1218), the computing device divides the currently selected segment into num_segment_lut2_cur to change the mapping information for the second LUT for linear approximation, and subtracts the number of additionally used spaces of the second-stage LUT from the number of vacant spaces of the second LUT.

The computing device performs precise linear approximation on each of the sub-segments divided in two stages such that the error between the target function and the approximation function is reduced (S1220).

The computing device stores coefficients for calculated slopes and offsets in the second LUT (S1222).

The computing device calculates an error between the target function and the approximate function for each sub-segment (S 1224).

The computing device replaces the approximation error $E_{S1}$ for the segment selected in the first LUT with the largest error among the errors calculated for the second LUT (S1226).

As described above, the computing device repeat the process of mapping to the second LUT (S1208 to S 1226) until approximation errors of all segments including sub-segments become less than the threshold value $E_{TH}$ or there is no longer sufficient space left in the second LUT. By using this repeated process, it is possible to obtain a two-step function approximation result that can minimize approximation errors while satisfying the given LUT size condition of the HW.

In another embodiment according to the present disclosure, for K LUT included in a multi-stage LUT, the computing device can generate a multi-stage LUT based on linear approximation by applying the method of generating a two-stage LUT based on linear approximation as illustrated in FIG. 12 to the k-th (where k is a natural number from 1 to K-1) and the (k+1)-th LUT.

Although the present embodiment has been described with respect to application of the piecewise linear approximation method, the piecewise polynomial approximation method can also be applied similarly. In the case of piecewise linear approximation, an LUT that can store two coefficients is used because the formula representing each segment is y=Ax+B. When piecewise approximation is applied with a P-order polynomial, the formula representing each segment is $y = \sum_{i=0}^{P} C_i \cdot x^i$, and thus the number of coefficients stored for one segment is (P+1). Therefore, a LUT that can store (P+1) coefficients is used.

Since the examples of FIGS. 6 to 8 show linear approximation, in representing two coefficients present in each segment, for example, NaN code is used to indicate a coefficient for storing mapping information for the LUT of the next stage. Since (P+1) coefficients are used in polynomial approximation, the method of using the NaN code is similarly expanded such that mapping information for the LUT of the next stage can be stored at a preset position among (P+1) coefficients of the previous stage.

Hereinafter, the performance of the two-stage piecewise linear approximation method among the multi-stage methods according to the present embodiment is compared with the performance of the existing one-stage piecewise linear approximation method. Comparison results for tanh and sigmoid functions, which are activation functions frequently used in neural networks, are shown in Table 1.

[Table 1]

| Target function (Input range={-16, 16}) | | tanh | | sigmoid | | mish | |
|---|---|---|---|---|---|---|---|
| | | 1 stage | 2 stages | 1 stage | 2 stages | 1 stage | 2 stages |
| Number of segments | 1st LUT | 64 | 8 | 64 | 8 | 64 | 16 |
| | 2nd LUT | - | 22 | - | 40 | - | 22 |
| | Sum | 64 (100%) | 40 (62.5%) | 64 (100%) | 48 (75%) | 64 (100%) | 38 (59.4%) |
| Error | Max error | 1.5E-2 | 3.9E-3 | 1.9E-3 | 1.4E-3 | 1.2E-2 | 3.9E-3 |
| | RMSE | 1.6E-3 | 4.4E-4 | 3.5E-4 | 2.2E-4 | 1.4E-3 | 6.9E-4 |

Table 1 shows LUT sizes (sizes of the first LUT and the second LUT) when approximation errors are similar when piecewise linear approximation is applied to 64 segments using the existing method and a case where two-stage piecewise linear approximation is applied. Compared to the existing method, the proposed multi-level LUT method can approximate the target function with a similar approximation error by using only LUTs with a size of 59.4% to 75%.

Although the steps in the respective flowcharts are described to be sequentially performed, the steps merely instantiate the technical idea of some embodiments of the present disclosure. Therefore, a person having ordinary skill in the art to which this disclosure pertains could perform the steps by changing the sequences described in the respective drawings or by performing two or more of the steps in parallel. Hence, the steps in the respective flowcharts are not limited to the illustrated chronological sequences.

Various implementations of the systems and methods described herein may be realized by digital electronic circuitry, integrated circuits, field-programmable gate arrays (FPGAs), application-specific integrated circuits (ASICs), computer hardware, firmware, software, and/or their combination. These various implementations can include those realized in one or more computer programs executable on a programmable system. The programmable system includes at least one programmable processor coupled to receive and transmit data and instructions from and to a storage system, at least one input device, and at least one output device, wherein the programmable processor may be a special-purpose processor or a general-purpose processor. The computer programs (which are also known as programs, software, software applications, or code) contain instructions for a programmable processor and are stored in a "computer-readable recording medium."

Although embodiments of the present disclosure have been described for illustrative purposes, those having ordinary skill in the art to which this disclosure pertains should appreciate that various modifications, additions, and substitutions are possible, without departing from the idea and scope of the present disclosure. Therefore, embodiments of the present disclosure have been described for the sake of brevity and clarity. The scope of the technical idea of the embodiments of the present disclosure is not limited by the illustrations. Accordingly, those having ordinary skill in the art to which the present disclosure pertains should understand that the scope of the present disclosure should not be limited by the above explicitly described embodiments but by the claims and equivalents thereof.

(Reference Numerals)

130: processor
132: controller
134: register
136: calculation unit
138: memory access unit
202: input unit
204: index generator
206: first LUT
208: number determiner
212: second LUT
214: function value generator
220: memory
230: coefficient extractor

CROSS-REFERENCE TO RELATED APPLICATIONS

This application claims priority to and the benefit of Korean Patent Application No. 10-2021-0094365, filed on July 19, 2021, the entire disclosures of each of which are incorporated herein by reference.

**Claims**

1. A piecewise function approximation method performed by a computing device, comprising:

obtaining an input variable value for a function;
extracting approximation coefficients for the function using a multi-level lookup table (LUT) based on the input variable value, the multi-level LUT including K (K being a natural number of 2 or more) LUTs; and
calculating a function value for the input variable value using the approximation coefficients,
wherein the K LUTs support different segment sizes, a segment size supported by a k-th (k being a natural number from 1 to K-1) LUT is greater than a segment side supported by a (k+1)-th LUT, and the (k+1)-th LUT is accessed based on mapping information provided by the k-th LUT.

2. The piecewise function approximation method of claim 1, wherein the mapping information is information for dividing each of t segments (t being a natural number) into sub-segments supported by the (k+1)-th LUT with respect to the t segments among all segments supported by the k-th LUT.

3. The piecewise function approximation method of claim 2, wherein each of the t segments has an approximation error for the function greater than a preset threshold value, and a number of sub- segments is determined depending on a size of the approximation error of each of the t segments.

4. The piecewise function approximation method of claim 2, wherein the mapping information includes, for each of the t segments, a base index indicating a starting position in the (k+1)-th LUT and a number of sub-segments.

5. The piecewise function approximation method of claim 1, wherein the k-th LUT includes the approximation coefficients or the mapping information as information on a segment, and a K-th LUT includes the approximation coefficients as information on a segment.

6. The piecewise function approximation method of claim 1, wherein extracting the approximation coefficients comprises:

generating a j-th index (j being a natural number from 1 to K) based on the input variable value and the mapping information, wherein, when the j-th index is a first index, the first index is generated based only on the input variable value;
extracting a j-th output from a j-th LUT using the j-th index; and
extracting the j-th output as the approximation coefficients when the j-th output is a number in a floating point number system,
wherein extracting the approximation coefficients using the mapping information is repeated when the j-th output is the mapping information.

7. The piecewise function approximation method of claim 1, wherein each of the K LUTs assigns the approximation coefficients to a code region used as a number and assigns the mapping information to a code region not used as a number in a floating point number system.

8. The piecewise function approximation method of claim 7, wherein, when a sub-normal number code is not used to represent the approximation coefficients, each of the K LUTs assigns the mapping information to the sub-normal number mode region.

9. The piecewise function approximation method of claim 8, wherein, for a floating point number representing a number of sub-segments in the mapping information, a non-zero value is set to a mantissa field to indicate the mapping information.

10. The piecewise function approximation method of claim 8, wherein, for a floating point number representing the mapping information, a bit value of one preset position in a mantissa field is set to 1 to indicate the mapping information.

11. The piecewise function approximation method of claim 8, wherein, for the floating point number representing the mapping information, a preset value is set to a sign field to indicate the mapping information.

12. A piecewise function approximation device comprising:

an input unit configured to obtain an input variable value for a function;
a memory containing a multi-level lookup table (LUT), the multi-level LUT including K (K being a natural number of 2 or more) LUTs;
a coefficient extractor configured to extract approximation coefficients for the function using the multi-level lookup table (LUT) based on the input variable value; and
a function value generator configured to calculate a function value for the input variable value using the approximation coefficients,
wherein the K LUTs support different segment sizes, a segment size supported by a k-th (k being a natural number from 1 to K-1) LUT is greater than a segment side supported by a (k+1)-th LUT, and the (k+1)-th LUT is accessed based on mapping information provided by the k-th LUT.

13. The piecewise function approximation device of claim 12, wherein the mapping information is information for dividing each of t segments (t being a natural number) into sub-segments supported by the (k+1)-th LUT with respect to the t segments among all segments supported by the k-th LUT.

14. The piecewise function approximation device of claim 13, wherein each of the t segments has an approximation error for the function greater than a preset threshold value, and a number of sub-segments is determined depending on a size of the approximation error of each of the t segments.

15. The piecewise function approximation device of claim 12, wherein the coefficient extractor comprises:

an index generator configured to generate a j-th index (j being a natural number from 1 to K) based on the input variable value and the mapping information, wherein, when the j-th index is a first index, the first index is generated based only on the input variable value; and

a number determiner configured to determine whether a j-th output extracted from a j-th LUT based on the j-th index is a number in a floating point number system,

wherein the coefficient extractor is configured to extract the j-th output as the approximation coefficients when the j-th output is the number in the floating point number system, and re-extract the approximation coefficients using the mapping information when the j-th output is the mapping information.

16. The piecewise function approximation device of claim 12, wherein each of the K LUTs assigns the approximation coefficients to a code region used as a number and assigns the mapping information to a code region not used as a number in a floating point number system.

17. A computer-readable recording medium in which instructions are stored, the instructions causing a computer, when executed by the computer, to execute:

obtaining an input variable value for a function;
extracting approximation coefficients for the function using a multi-level lookup table (LUT) based on the input variable value, the multi-level LUT including K (K being a natural number of 2 or more) LUTs; and
calculating a function value for the input variable value using the approximation coefficients,
wherein the K LUTs support different segment sizes, a segment size supported by a k-th (k being a natural number from 1 to K-1) LUT is greater than a segment side supported by a (k+1)-th LUT, and the (k+1)-th LUT is accessed based on mapping information provided by the k-th LUT.

## FIG. 1

*136*

**FIG. 2**

size of LUT = 20(8+2+4+4+2)

# FIG. 3

First LUT

LUT data = {slope, offset} or {BaseIndex, NumSeg}

| | | |
|---|---|---|
| [0] | A | B | for $S_{A0}$
| [1] | BaseIndex_$S_{Ba}$ (0) | NumSeg_$S_{Ba}$ (2) | for $S_{A1}$
| [2] | BaseIndex_$S_{Bb}$ (2) | NumSeg_$S_{Bb}$ (4) | for $S_{A2}$
| [3] | A | B | for $S_{A3}$
| [4] | A | B | for $S_{A4}$
| [5] | BaseIndex_$S_{Bc}$ (6) | NumSeg_$S_{Bc}$ (4) | for $S_{A5}$
| [6] | BaseIndex_$S_{Bd}$ (10) | NumSeg_$S_{Bd}$ (2) | for $S_{A6}$
| [7] | A | B | for $S_{A7}$

Second LUT

LUT data = {slope, offset}

| | | |
|---|---|---|
| [0] | A | B | for $S_{Ba0}$
| [1] | A | B | for $S_{Ba1}$
| [2] | A | B | for $S_{Bb0}$
| [3] | A | B | for $S_{Bb1}$
| [4] | A | B | for $S_{Bb2}$
| [5] | A | B | for $S_{Bb3}$
| [6] | A | B | for $S_{Bc0}$
| [7] | A | B | for $S_{Bc1}$
| [8] | A | B | for $S_{Bc2}$
| [9] | A | B | for $S_{Bc3}$
| [10] | A | B | for $S_{Bd0}$
| [11] | A | B | for $S_{Bd1}$

Size of LUT = 20(8 +(2 + 4+ 4+ 2))

*FIG. 4*

EP 4 375 855 A1

| FP16 | S(1) | E(5) | M(10) | meaning |
|------|------|------|-------|---------|
| | x | 00000 | 0 | +/− zero |
| | x | 00000 | non-zero | sub-normal number    value $= (-1)^S \times 2^{-14} \times 0.M_2$ |
| | x | 11111 | 0 | +/− Infinity |
| | x | 11111 | non-zero | NaN (not a number) |
| | x | 00001 ~ 11110 | x | Normalized number    value $= (-1)^S \times 2^{(E-15)} \times 1.M_2$ |

# FIG. 5

First LUT

LUT data = {slope, offset} or {BaseIndex, NumSeg}

| | | | |
|---|---|---|---|
| [0] | A | B | for $S_{A0}$ |
| [1] | BaseIndex_$S_{Ba}$ (0) | NumSeg_$S_{Ba}$ (2) | for $S_{A1}$ |
| [2] | BaseIndex_$S_{Bb}$ (2) | NumSeg_$S_{Bb}$ (4) | for $S_{A2}$ |
| [3] | A | B | for $S_{A3}$ |
| [4] | A | B | for $S_{A4}$ |
| [5] | BaseIndex_$S_{Bc}$ (6) | NumSeg_$S_{Bc}$ (4) | for $S_{A5}$ |
| [6] | BaseIndex_$S_{Bd}$ (10) | NumSeg_$S_{Bd}$ (2) | for $S_{A6}$ |
| [7] | A | B | for $S_{A7}$ |

| | | | |
|---|---|---|---|
| BaseIndex_$S_{Ba}$ (0) | 0 | 11111 | 00_0000_0000 |
| NumSeg_$S_{Ba}$ (2) | 0 | 11111 | 00_0000_0010 |
| BaseIndex_$S_{Bb}$ (2) | 0 | 11111 | 00_0000_0010 |
| NumSeg_$S_{Bb}$ (4) | 0 | 11111 | 00_0000_0100 |
| BaseIndex_$S_{Bc}$ (6) | 0 | 11111 | 00_0000_0110 |
| NumSeg_$S_{Bc}$ (4) | 0 | 11111 | 00_0000_0100 |
| BaseIndex_$S_{Bd}$ (10) | 0 | 11111 | 00_0000_1010 |
| NumSeg_$S_{Bd}$ (2) | 0 | 11111 | 00_0000_0010 |

*FIG. 6*

First LUT

LUT data = {slope, offset} or {BaseIndex, NumSeg}

| | | | |
|---|---|---|---|
| [0] | A | B | for $S_{A0}$ |
| [1] | BaseIndex_$S_{Ba}$ (0) | NumSeg_$S_{Ba}$ (2) | for $S_{A1}$ |
| [2] | BaseIndex_$S_{Bb}$ (2) | NumSeg_$S_{Bb}$ (4) | for $S_{A2}$ |
| [3] | A | B | for $S_{A3}$ |
| [4] | A | B | for $S_{A4}$ |
| [5] | BaseIndex_$S_{Bc}$ (6) | NumSeg_$S_{Bc}$ (4) | for $S_{A5}$ |
| [6] | BaseIndex_$S_{Bd}$ (10) | NumSeg_$S_{Bd}$ (2) | for $S_{A6}$ |
| [7] | A | B | for $S_{A7}$ |

| | | | | |
|---|---|---|---|---|
| BaseIndex_$S_{Ba}$ (0) | 0 | 11111 | 1 | 0_0000_0000 |
| NumSeg_$S_{Ba}$ (2) | 0 | 11111 | | 00_0000_0010 |

| | | | | |
|---|---|---|---|---|
| BaseIndex_$S_{Bb}$ (2) | 0 | 11111 | 1 | 0_0000_0010 |
| NumSeg_$S_{Bb}$ (4) | 0 | 11111 | | 00_0000_0100 |

| | | | | |
|---|---|---|---|---|
| BaseIndex_$S_{Bc}$ (6) | 0 | 11111 | 1 | 0_0000_0110 |
| NumSeg_$S_{Bc}$ (4) | 0 | 11111 | | 00_0000_0100 |

| | | | | |
|---|---|---|---|---|
| BaseIndex_$S_{Bd}$ (10) | 0 | 11111 | 1 | 0_0000_1010 |
| NumSeg_$S_{Bd}$ (2) | 0 | 11111 | | 00_0000_0010 |

*FIG. 7*

First LUT

LUT data = {slope, offset} or {BaseIndex, NumSeg}

| | | | |
|---|---|---|---|
| [0] | A | B | for $S_{A0}$ |
| [1] | BaseIndex_$S_{Ba}$ (0) | NumSeg_$S_{Ba}$ (2) | for $S_{A1}$ |
| [2] | BaseIndex_$S_{Bb}$ (2) | NumSeg_$S_{Bb}$ (4) | for $S_{A2}$ |
| [3] | A | B | for $S_{A3}$ |
| [4] | A | B | for $S_{A4}$ |
| [5] | BaseIndex_$S_{Bc}$ (6) | NumSeg_$S_{Bc}$ (4) | for $S_{A5}$ |
| [6] | BaseIndex_$S_{Bd}$ (10) | NumSeg_$S_{Bd}$ (2) | for $S_{A6}$ |
| [7] | A | B | for $S_{A7}$ |

BaseIndex_$S_{Ba}$ (0)

| 0 | 11111 | 00_0000_0000 |
|---|---|---|

NumSeg_$S_{Ba}$ (2)

| 0 | 11111 | 1 | 0_0000_0010 |
|---|---|---|---|

BaseIndex_$S_{Bb}$ (2)

| 0 | 11111 | 00_0000_0010 |
|---|---|---|

NumSeg_$S_{Bb}$ (4)

| 0 | 11111 | 1 | 0_0000_0100 |
|---|---|---|---|

BaseIndex_$S_{Bc}$ (6)

| 0 | 11111 | 00_0000_0110 |
|---|---|---|

NumSeg_$S_{Bc}$ (4)

| 0 | 11111 | 1 | 0_0000_0100 |
|---|---|---|---|

BaseIndex_$S_{Bd}$ (10)

| 0 | 11111 | 00_0000_1010 |
|---|---|---|

NumSeg_$S_{Bd}$ (2)

| 0 | 11111 | 1 | 0_0000_0010 |
|---|---|---|---|

*FIG. 8*

Start

Obtain input variable ~S900

Generate first index from input variable ~S902

Extract output of first LUT
based on first index ~S904

S906

Is output of first LUT number? — Yes (Linear approximation coefficients)

No (Mapping information)

Generate second index from input
variable and mapping information ~S908

Extract output of second LUT
based on second index ~S910

Generate approximation value for function
using linear approximation coefficients ~S912

End

# FIG. 9

<u>136</u>

FIG. 10

Start

Obtain input variable and initialize j to 1 — *S1100*

Generate j-th index from input variable and mapping information — *S1102*

Extract j-th output from j-th LUT based on j-th index — *S1104*

*S1106*

Is j-th output number? — No (Mapping information)

Yes (Linear approximation coefficients)

Generate approximation value for function using linear approximation coefficients — *S1110*

End

*FIG. 11*

Start

Apply piecewise linear approximation to target function — S1200

Store coefficients for calculated slope and offset in first LUT — S1202

Calculate error between target function and approximation function for each segment — S1204

Set number of areas lut2_remained that are not yet filled with values in second LUT as size of second LUT — S1206

Select segment $S_1$ with largest error $E_{S1}$ from segments of first LUT — S1208

S1210 $E_{S1} < E_{TH}$? — Yes

No

S1212 Is $S_1$ mapped to second LUT? — No

S1216 Set num_segment_lut2_cur to 2

S1220 Perform precise linear approximation on each sub-segment

Yes

S1214 Set num_segment_lut2_cur to twice number of segments mapped to second LUT

Store coefficients for calculated slopes and offsets in second LUT

S1218 num_segment_lut2_cur < lut2_remained? — Yes

S1222 Calculate error between target function and approximation function for each sub-segment

No

S1226 — Replace approximation error $E_{S1}$ for segment selected from first LUT with largest error among errors calculated for second LUT — S1224

End

*FIG. 12*

size of LUT = 8

# FIG. 13

LUT data = {slope, offset}

| | | |
|---|---|---|
| [0] | A | B | for $S_{A0}$ |
| [1] | A | B | for $S_{A1}$ |

.
.
.

| [7] | A | B | for $S_{A7}$ |

Size of LUT = 8

# FIG. 14

size of LUT = 28(8+20)

# FIG. 15

First LUT

LUT data = {slope, offset}

| | | |
|---|---|---|
| [0] | A | B | for $S_{A0}$
| [1] | A | B | for $S_{A1}$

. . .

[7] A B for $S_{A7}$

Second LUT

LUT data = {slope, offset}

| | | |
|---|---|---|
| [0] | A | B | for $S_{B0}$
| [1] | A | B | for $S_{B1}$

. . .

[19] A B for $S_{B19}$

Size of LUT = 28(8+20)

**FIG. 16**

## INTERNATIONAL SEARCH REPORT

| International application No. |
|---|
| **PCT/KR2022/010127** |

**A.    CLASSIFICATION OF SUBJECT MATTER**

**G06F 17/17**(2006.01)i; **G06F 5/01**(2006.01)i

According to International Patent Classification (IPC) or to both national classification and IPC

**B.    FIELDS SEARCHED**

Minimum documentation searched (classification system followed by classification symbols)

G06F 17/17(2006.01); G06F 1/02(2006.01); G06F 17/12(2006.01); G06F 7/00(2006.01); G06F 9/30(2006.01); H03F 1/32(2006.01); H03F 3/24(2006.01); H04B 1/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 멀티 레벨(multi-level), 룩업 테이블(lookup table), 세그멘트(segment), 구간별 선형 근사(piecewise linear approximation), 근사 계수(approximation coefficient)

**C.    DOCUMENTS CONSIDERED TO BE RELEVANT**

| Category* | Citation of document, with indication, where appropriate, of the relevant passages | Relevant to claim No. |
|---|---|---|
| Y | KR 10-1718224 B1 (INFINEON TECHNOLOGIES AG) 20 March 2017 (2017-03-20)<br>See paragraphs [0012], [0023], [0030]-[0031] and [0034]-[0035]. | 1-17 |
| Y | KR 10-2019-0037236 A (QUALCOMM INCORPORATED) 05 April 2019 (2019-04-05)<br>See paragraphs [0016] and [0019]. | 1-17 |
| A | JP 2005-208845 A (TOSHIBA CORP.) 04 August 2005 (2005-08-04)<br>See claim 1. | 1-17 |
| A | KR 10-2004-0016366 A (ELECTRONICS AND TELECOMMUNICATIONS RESEARCH INSTITUTE) 21 February 2004 (2004-02-21)<br>See paragraphs [0009] and [0034]-[0035]. | 1-17 |
| A | KR 10-2014-0077675 A (ELECTRONICS AND TELECOMMUNICATIONS RESEARCH INSTITUTE) 24 June 2014 (2014-06-24)<br>See claim 1. | 1-17 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 October 2022** | **19 October 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<table>
<tr><td colspan="2" rowspan="2">INTERNATIONAL SEARCH REPORT<br>Information on patent family members</td><td>International application No.</td></tr>
<tr><td>**PCT/KR2022/010127**</td></tr>
</table>

| Patent document cited in search report | | | Publication date (day/month/year) | Patent family member(s) | | | Publication date (day/month/year) |
|---|---|---|---|---|---|---|---|
| KR | 10-1718224 | B1 | 20 March 2017 | CN | 105320492 | A | 10 February 2016 |
| | | | | CN | 105320492 | B | 07 August 2018 |
| | | | | DE | 102015112463 | A1 | 04 February 2016 |
| | | | | US | 2016-0034421 | A1 | 04 February 2016 |
| KR | 10-2019-0037236 | A | 05 April 2019 | BR | 112019001552 | A2 | 14 May 2019 |
| | | | | CN | 109478199 | A | 15 March 2019 |
| | | | | EP | 3491535 | A2 | 05 June 2019 |
| | | | | JP | 2019-523503 | A | 22 August 2019 |
| | | | | JP | 6687803 | B2 | 28 April 2020 |
| | | | | US | 10466967 | B2 | 05 November 2019 |
| | | | | US | 2018-0032311 | A1 | 01 February 2018 |
| | | | | WO | 2018-022191 | A2 | 01 February 2018 |
| | | | | WO | 2018-022191 | A3 | 26 April 2018 |
| JP | 2005-208845 | A | 04 August 2005 | JP | 3845636 | B2 | 15 November 2006 |
| | | | | US | 2005-0160129 | A1 | 21 July 2005 |
| | | | | US | 7472149 | B2 | 30 December 2008 |
| KR | 10-2004-0016366 | A | 21 February 2004 | US | 6642786 | B1 | 04 November 2003 |
| KR | 10-2014-0077675 | A | 24 June 2014 | | None | | |

Form PCT/ISA/210 (patent family annex) (July 2022)

**REFERENCES CITED IN THE DESCRIPTION**

**Patent documents cited in the description**

- KR 1020210094365